# EUROPEAN PATENT APPLICATION

(11) **EP 2 639 283 A1**
(43) Date of publication of application: **18.09.2013**
(21) Application number: 11840344.3
(22) Date of filing: 08.11.2011
(51) Int. Cl.: C09J 201/00, B32B 27/00, B32B 27/30, C09J 7/02, C09J 11/04, C09J 133/06

(54) **WATER-DISPERSIBLE OIL-RESISTANT ADHESIVE AGENT COMPOSITION, OIL-RESISTANT ADHESIVE SHEET, ADHESION METHOD, AND OIL-RESISTANT ADHESIVE STRUCTURE**

(30) Priority: 07.11.2011 JP 2011243221; 08.11.2010 JP 2010250050
(71) Applicant: Nitto Denko Corporation, Osaka 567-8680 (JP)
(72) Inventor: NAITO, Tomonari, Ibaraki-shi Osaka 567-8680 (JP); ISEKI, Azusa, Ibaraki-shi Osaka 567-8680 (JP); KUBO, Asami, Ibaraki-shi Osaka 567-8680 (JP); TAKAYAMA, Yoshinari, Ibaraki-shi Osaka 567-8680 (JP); TAGAWA, Kenichi, Ibaraki-shi Osaka 567-8680 (JP)
(74) Representative: Grünecker, Kinkeldey, Stockmair & Schwanhäusser
(86) International application number: PCT/JP2011/075699
(87) International publication number: WO 2012/063811

(57) **Abstract**

An aqueous dispersion type oil-resistant pressure-sensitive adhesive composition contains an aqueous dispersion polymer and inorganic particles. The content ratio of the inorganic particles with respect to 100 parts by mass of the aqueous dispersion polymer is 3 to 90 parts by mass.

## Description

### Technical Field

The present invention relates to an aqueous dispersion type oil-resistant pressure-sensitive adhesive composition, an oil-resistant pressure-sensitive adhesive sheet, an adhesion method, and an oil-resistant adhesive structure.

### Background Art

Conventionally, a pressure-sensitive adhesive composition has been used in various industrial products. In recent years, for example, the pressure-sensitive adhesive composition has been used in bonding, fixing, or the like of vehicle wires and various vehicle components.

In the above-described use, in a state where various oils or oil such as gasoline are/is attached to the pressure-sensitive adhesive composition; in a state where the pressure-sensitive adhesive composition is exposed to mist of various oils; or furthermore, in a state where the oil is present, the temperature of the pressure-sensitive adhesive composition is increased to be high. Therefore, the pressure-sensitive adhesive composition is required to have excellent oil-resistant properties in which the adhesive force (the pressure-sensitive adhesive force) is not easily reduced even under the above-described environment.

In order to improve the oil-resistant properties, for example, a pressure-sensitive adhesive obtained by an anionic aqueous dispersion of an acrylic block copolymer in which an acrylic block copolymer (A) consisting of a methacrylic polymer block (a) and an acrylic polymer block (b) is emulsion-dispersed in water in the presence of 1 to 15 parts by weight of an anionic surfactant (B) with respect to 100 parts by weight of the acrylic block copolymer (A) has been proposed (ref: for example, Patent Document 1).

### Prior Art Document

### Patent Document

Patent Document 1: Japanese Unexamined Patent Publication No. 2008-291130

### Summary of the Invention

### Problems to be solved by the Invention

However, in recent years, the pressure-sensitive adhesive used for the above-described use has been required to further improve the oil-resistant properties.

It is an object of the present invention to provide an aqueous dispersion type oil-resistant pressure-sensitive adhesive composition having excellent oil-resistant properties, an oil-resistant pressure-sensitive adhesive sheet, an adhesion method, and an oil-resistant adhesive structure.

### Solution to the Problems

An aqueous dispersion type oil-resistant pressure-sensitive adhesive composition of the present invention contains an aqueous dispersion polymer and inorganic particles, wherein the content ratio of the inorganic particles with respect to 100 parts by mass of the aqueous dispersion polymer is 3 to 90 parts by mass.

In the aqueous dispersion type oil-resistant pressure-sensitive adhesive composition of the present invention, it is preferable that an external cross-linking agent is further blended therein.

In the aqueous dispersion type oil-resistant pressure-sensitive adhesive composition of the present invention, it is preferable that the average particle size of each of the inorganic particles is 1 to 1000 nm.

In the aqueous dispersion type oil-resistant pressure-sensitive adhesive composition of the present invention, it is preferable that the inorganic particles are silica particles.

In the aqueous dispersion type oil-resistant pressure-sensitive adhesive composition of the present invention, it is preferable that the aqueous dispersion polymer is an acrylic polymer obtained by polymerizing a monomer component which contains, as the primary component, an alkyl (meth)acrylate.

In the oil-resistant pressure-sensitive adhesive sheet of the present invention, it is preferable that the standard deviation of the average particle size of the aqueous dispersion polymer based on volume is 0.001 µm or more and 0.2 µm or less.

An oil-resistant pressure-sensitive adhesive sheet of the present invention includes a pressure-sensitive adhesive layer prepared from an aqueous dispersion type oil-resistant pressure-sensitive adhesive composition, wherein the aqueous dispersion type oil-resistant pressure-sensitive adhesive composition contains an aqueous dispersion polymer and inorganic particles, and the content ratio of the inorganic particles with respect to 100 parts by mass of the aqueous dispersion polymer is 3 to 90 parts by mass.

In the oil-resistant pressure-sensitive adhesive sheet of the present invention, it is preferable that the oil-resistant pressure-sensitive adhesive sheet further includes a substrate and the pressure-sensitive adhesive layer is laminated on at least one-side surface of the substrate.

An adhesion method of the present invention includes allowing an oil-resistant pressure-sensitive adhesive sheet to adhere to an adherend disposed under the environment of presence of oil, and an aqueous dispersion type oil-resistant pressure-sensitive adhesive composition contains an aqueous dispersion polymer and inorganic particles, and the content ratio of the inorganic particles with respect to 100 parts by mass of the aqueous dispersion polymer is 3 to 90 parts by mass.

An oil-resistant adhesive structure of the present invention obtained by allowing an oil-resistant pressure-sensitive adhesive sheet to adhere to an adherend disposed under the environment of presence of oil, and an aqueous dispersion type oil-resistant pressure-sensitive adhesive composition contains an aqueous dispersion polymer and inorganic particles, and the content ratio of the inorganic particles with respect to 100 parts by mass of the aqueous dispersion polymer is 3 to 90 parts by mass.

### Effect of the Invention

The aqueous dispersion type oil-resistant pressure-sensitive adhesive composition of the present invention contains the aqueous dispersion polymer and the inorganic particles at a predetermined proportion, so that the aqueous dispersion type oil-resistant pressure-sensitive adhesive composition has excellent oil-resistant properties and an excellent heat resistance. That is, a deterioration under the environment of presence of oil and/or a reduction of the pressure-sensitive adhesive force after a long elapse of time can be prevented.

Therefore, even when the oil-resistant pressure-sensitive adhesive sheet of the present invention including the pressure-sensitive adhesive layer prepared from the aqueous dispersion type oil-resistant pressure-sensitive adhesive composition is allowed to adhere to the adherend disposed under the environment of presence of oil, the pressure-sensitive adhesive force with respect to the adherend can be retained. In addition, even when the atmosphere in such an environment is subjected to high temperature, the pressure-sensitive adhesive force with respect to the adherend described above can be also retained.

As a result, the oil-resistant adhesive structure of the present invention obtained by allowing the above-described oil-resistant pressure-sensitive adhesive sheet to adhere to the adherend can be used for various industrial products.

### Brief Description of the Drawings

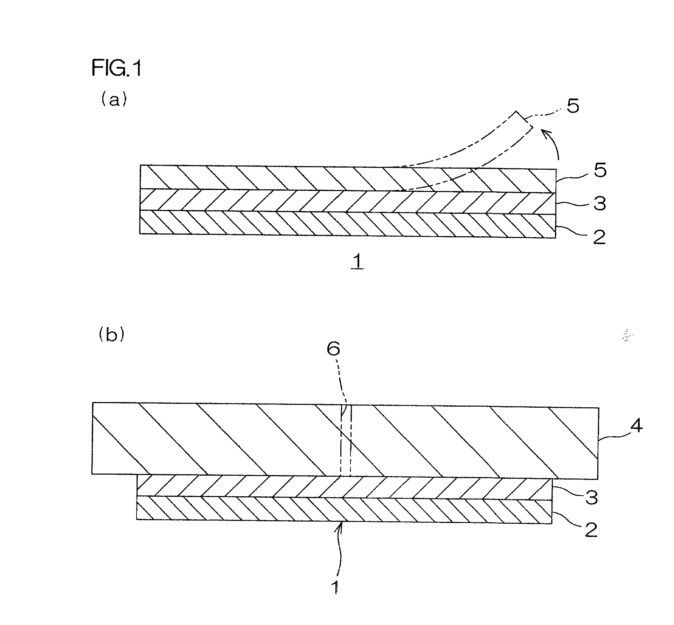

[FIG 1] FIG. 1 shows sectional views for illustrating a method for allowing one embodiment (an embodiment in which a pressure-sensitive adhesive layer is laminated on one-side surface of a substrate) of an oil-resistant pressure-sensitive adhesive sheet of the present invention to adhere to an adherend:
   (a) illustrating a step of preparing the oil-resistant pressure-sensitive adhesive sheet and
   (b) illustrating a step of allowing the pressure-sensitive adhesive layer in the oil-resistant pressure-sensitive adhesive sheet to adhere to the adherend.

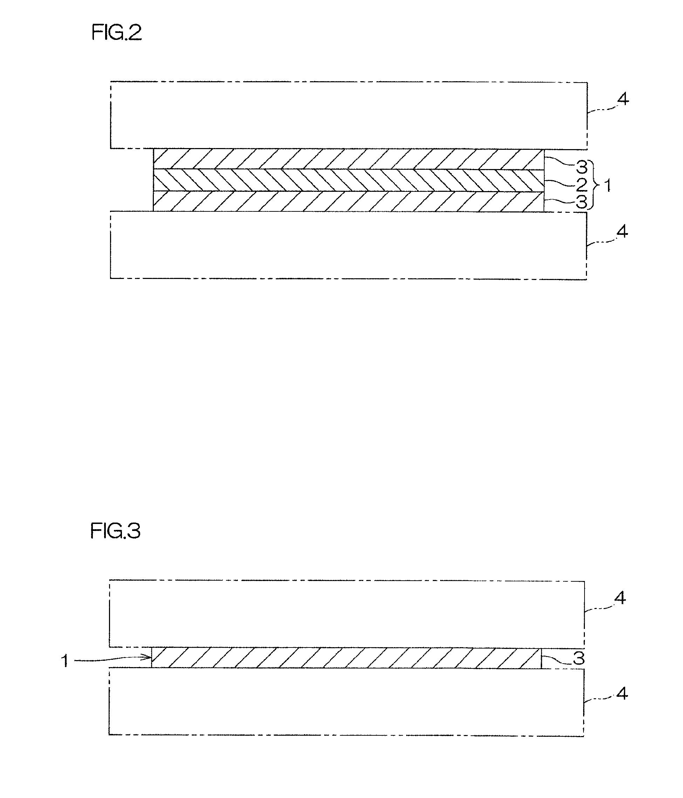

[FIG 2] FIG. 2 shows a sectional view for illustrating a method for allowing another embodiment (an embodiment in which a pressure-sensitive adhesive layer is laminated on both-side surfaces of a substrate) of an oil-resistant pressure-sensitive adhesive sheet of the present invention to adhere to an adherend.
[FIG. 3] FIG. 3 shows a sectional view for illustrating a method for allowing another embodiment (an embodiment in which a substrate is not provided) of an oil-resistant pressure-sensitive adhesive sheet of the present invention to adhere to an adherend.

### Embodiment of the Invention

An aqueous dispersion type oil-resistant pressure-sensitive adhesive composition of the present invention contains an aqueous dispersion polymer and inorganic particles.

Examples of the aqueous dispersion polymer include an acrylic polymer and a rubber such as a styrene butadiene rubber, a butadiene rubber, a chloroprene rubber, an isoprene rubber, an ethylene propylene diene rubber, a polyurethane rubber, and a natural rubber. Preferably, in view of pressure-sensitive adhesive properties (adhesive properties), an acrylic polymer is used.

The acrylic polymer can be obtained by polymerizing a monomer component which contains, as the primary component, an alkyl (meth)acrylate.

The alkyl (meth)acrylate is an alkyl methacrylate and/or an alkyl acrylate, and is, for example, represented by the following general formula (1).

CH₂=C(R¹)COOR² (1)

(where, in general formula (1), R¹ represents a hydrogen atom or a methyl group and R² represents an alkyl group having 2 to 14 carbon atoms.)
Examples of the alkyl group represented by R² include a straight chain or branched chain alkyl group having 2 to 14 carbon atoms such as an ethyl group, a propyl group, an isopropyl group, a butyl group, an isobutyl group, a sec-butyl group, a t-butyl group, a pentyl group, a neopentyl group, an isopentyl group, a hexyl group, a heptyl group, an octyl group, a 2-ethylhexyl group, an isooctyl group, a nonyl group, an isononyl group, a decyl group, an isodecyl group, an undecyl group, a dodecyl group, a tridecyl group, and a tetradecyl group.

Preferably, the number of carbon atoms of the alkyl group represented by R² is 3 or more.

To be specific, an example of the alkyl (meth)acrylate includes an alkyl (meth)acrylate (a straight chain or branched chain alkyl having 2 to 14 carbon atoms) such as ethyl (meth)acrylate, propyl (meth)acrylate, isopropyl (meth)acrylate, butyl (meth)acrylate, isobutyl (meth)acrylate, sec-butyl (meth)acrylate, t-butyl (meth)acrylate, pentyl (meth)acrylate, neopentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, and tetradecyl (meth)acrylate.

Preferably, propyl (meth)acrylate, isopropyl (meth)acrylate, butyl (meth)acrylate, isobutyl (meth)acrylate, sec-butyl (meth)acrylate, t-butyl (meth)acrylate, and 2-ethylhexyl (meth)acrylate are used.

These alkyl (meth)acrylates can be used alone or in combination of two or more.

When the alkyl (meth)acrylate is used alone, preferably, butyl (meth)acrylate is used.

On the other hand, when the alkyl (meth)acrylates are used in combination, for example, a combination of an alkyl (meth)acrylate containing an alkyl portion having carbon atoms of 3 or more and 6 or less (preferably, 3 or more and 4 or less) and an alkyl (meth)acrylate containing an alkyl portion having carbon atoms of 7 or more and 14 or less (preferably, 7 or more and 10 or less) is used. To be specific, a combination of butyl (meth)acrylate and 2-ethylhexyl (meth)acrylate is used.

The mixing ratio of the alkyl (meth)acrylate with respect to the total amount of the monomer component is, for example, 80 mass % or more (to be specific, 80 to 99.8 mass %), preferably 85 mass % or more (to be specific, 85 to 99.5 mass %), or more preferably 90 mass % or more (to be specific, 90 to 99 mass %).

A reactive functional group-containing vinyl monomer can be contained in the monomer component.

The reactive functional group-containing vinyl monomer is a thermal cross-linking functional group-containing vinyl monomer for introducing a cross-linking point that is used for thermal cross-linking to the inorganic particles. By allowing the reactive functional group-containing vinyl monomer to be contained in the monomer component, the pressure-sensitive adhesive force with respect to the adherend can be improved.

Examples of the reactive functional group-containing vinyl monomer include a carboxyl group-containing vinyl monomer such as an acrylic acid, a methacrylic acid, an itaconic acid, a maleic acid, a crotonic acid, and a maleic unhydride or an acid anhydride thereof; a hydroxyl group-containing vinyl monomer such as 2-hydroxyethyl (meth)acrylate, 2-hydroxypropyl (meth)acrylate, and 2-hydroxybutyl (meth)acrylate; an amide group-containing vinyl monomer such as (meth)acrylamide, N,N-dimethyl (meth)acrylamide, N-methylol (meth)acrylamide, N-methoxymethyl (meth)acrylamide, and N-butoxymethyl (meth)acrylamide; an amino group-containing vinyl monomer such as dimethylaminoethyl (meth)acrylate and t-butylaminoethyl (meth)acrylate; a glycidyl group-containing vinyl monomer such as glycidyl (meth)acrylate; and a nitrogen atom-containing vinyl monomer such as (meth)acrylonitrile, N-(meth)acryloylmorpholine, N-vinyl-2-pyrrolidone, and diacetone acrylamide.

These reactive functional group-containing vinyl monomers can be used alone or in combination. Preferably, a carboxyl group-containing vinyl monomer or an acid anhydride thereof is used.

The mixing ratio of the reactive functional group-containing vinyl monomer with respect to 100 parts by mass of the alkyl (meth)acrylate is, for example, 0.5 to 12 parts by mass, or preferably 1 to 8 parts by mass.

In addition, a copolymerizable vinyl monomer which is copolymerizable with the alkyl (meth)acrylate can be also blended in the monomer component.

The copolymerizable vinyl monomer is a vinyl monomer which is copolymerizable with the alkyl (meth)acrylate, excluding the above-described reactive functional group-containing vinyl monomer, and is blended as required so as to improve the cohesive force and the like.

Examples of the copolymerizable vinyl monomer include vinyl ester such as vinyl acetate; an aromatic vinyl monomer such as styrene and vinyl toluene; methyl (meth)acrylate; an alkyl (meth)acrylate of a cyclic alcohol such as cyclopentyl di(meth)acrylate and isobornyl (meth)acrylate; and alkyl (meth)acrylate of a polyhydric-alcohol such as neopentylglycol di(meth)acrylate, hexanediol di(meth)acrylate, propyleneglycol di(meth)acrylate, trimethylolpropane tri(meth)acrylate, tetramethylolmethane tri(meth)acrylate, and dipentaerythritol hexa(meth) acrylate.

An example of the copolymerizable vinyl monomer also includes a silicon vinyl monomer.

When the reactive functional group-containing vinyl monomer is used in combination with the alkyl (meth)acrylate, preferably, the silicon vinyl monomer is blended. The silicon vinyl monomer is blended so as to introduce a cross-linking point into the acrylic polymer.

The silicon vinyl monomer is a polymerizable compound which contains a silicon atom (silicon) and examples thereof include a silicon (meth)alkylate monomer having a (meth)acryloyl group and a vinyl group-containing silane monomer having a vinyl group.

Examples of the silicon alkylate monomer include 3-(meth)acryloyloxypropyltrimethoxysilane, 3-(meth)acryloyloxypropyltriethoxysilane, 3-(meth)acryloyloxypropylmethyldimethoxysilane, 3-(meth)acryloyloxypropylmethyldiethoxysilane, 6-(meth)acryloyloxyhexyltrimethoxysilane, 8-(meth)acryloyloxyoctyltrimethoxysilane, 10-(meth)acryloyloxydecyltrimethoxysilane, and 10-(meth)acryloyloxydecyltriethoxysilane.

The silicon alkylate monomers can be used alone or in combination of two or more. As the silicon alkylate monomer, preferably, 3-(meth)acryloyloxypropyltrimethoxysilane is used.

An example of the vinyl group-containing silane monomer includes vinylalkylalkoxysilane such as vinyltrimethoxysilane, vinyltriethoxysilane, 4-vinylbutyltrimethoxysilane, 4-vinylbutyltriethoxysilane, 8-vinyloctyltrimethoxysilane, and 8-vinyloctyltriethoxysilane.

These vinyl group-containing silane monomers can be used alone or in combination.

As the silicon vinyl monomer, preferably, in view of copolymerizability with respect to the alkyl (meth)acrylate, a silicon alkylate monomer is used.

The above-described copolymerizable vinyl monomers can be used alone or in combination.

As the copolymerizable vinyl monomer, preferably, a silicon vinyl monomer is used.

The mixing ratio of the copolymerizable vinyl monomer (preferably, the silicon alkylate monomer) is appropriately selected in accordance with the type of the alkyl (meth)acrylate, the use of the aqueous dispersion type oil-resistant pressure-sensitive adhesive composition, or the like. The mixing ratio thereof with respect to 100 parts by mass of the total amount of the alkyl (meth)acrylate and the reactive functional group-containing vinyl monomer is, for example, 0.005 to 1 parts by mass, or preferably 0.01 to 0.5 parts by mass. When the mixing ratio thereof is above the above-described range, the pressure-sensitive adhesive force may be reduced to such a degree as to make the adhesion to an adherend impossible. When the mixing ratio thereof is below the above-described range, the cohesive force may be reduced because of the insufficient strength of the aqueous dispersion polymer.

The aqueous dispersion polymer can be obtained by polymerizing (copolymerizing) the above-described monomer component.

In order to polymerize the above-described monomer component, for example, a known polymerization method such as emulsion polymerization is used.

In the emulsion polymerization, for example, an emulsifier, a polymerization initiator, a chain transfer agent, or the like are appropriately blended with the above-described monomer component in water to be polymerized. To be more specific, a known emulsion polymerization method such as a collective charging method (a collective polymerization method), a monomer dropping method, a monomer emulsion dropping method, or a combination of those methods can be used. In the monomer dropping method and the monomer emulsion dropping method, continuous dropping or divisional dropping is appropriately selected. The reaction conditions and the like are appropriately selected in accordance with the type of the polymerization initiator or the like and the polymerization temperature is, for example, 20 to 100°C.

The emulsifier is not particularly limited and a known emulsifier which is usually used in the emulsion polymerization is used. Examples thereof include an anionic emulsifier such as sodium lauryl sulfate, ammonium lauryl sulfate, sodium dodecylbenzenesulfonate, sodium polyoxyalkylene alkyl sulfate (to be specific, sodium polyoxyethylene lauryl sulfate), sodium polyoxyethylene alkyl ether sulfate, ammonium polyoxyethylene alkyl phenyl ether sulfate, sodium polyoxyethylene alkyl phenyl ether sulfate, and sodium polyoxyethylene alkyl sulfosuccinate and a nonionic emulsifier such as polyoxyethylene alkyl ether, polyoxyethylene alkyl phenyl ether, polyoxyethylene fatty acid ester, and polyoxyethylene polyoxypropylene block polymer.

These emulsifiers can be used alone or in combination of two or more. Preferably, an anionic emulsifier is used.

The mixing ratio of the emulsifier with respect to 100 parts by mass of the monomer component is, for example, 0.2 to 10 parts by mass, or preferably 0.5 to 5 parts by mass.

The polymerization initiator is not particularly limited and a polymerization initiator which is usually used in the emulsion polymerization is used. Examples thereof include an azo-based initiator such as 2,2'-azobisisobutyronitrile, 2,2'-azobis(2-methylpropioneamidine) disulfate, 2,2'-azobis(2-methylpropioneamidine) dihydrochloride, 2,2'-azobis(2-amidinopropane) dihydrochloride, 2,2'-azobis[N-(2-carboxyethyl)-2-methylpropioneamidine] hydrate, 2,2'-azobis(N,N'-dimethyleneisobutylamidine), 2,2'-azobis(N,N'-dimethyleneisobutylamidine) dihydrochloride, and 2,2'-azobis[2-(2-imidazoline-2-yl)propane] dihydrochloride; a persulfate-based initiator such as potassium persulfate and ammonium persulfate; a peroxide-based initiator such as benzoyl peroxide, t-butyl hydroperoxide, and hydrogen peroxide; a substituted ethane-based initiator such as phenyl-substituted ethane; a carbonyl-based initiator such as an aromatic carbonyl compound; and a redox-based initiator (a combination of peroxide and a reducing agent) such as a combination of persulfate and sodium hydrogen sulfite and a combination of peroxide and sodium ascorbate.

The polymerization initiator may be either water-soluble or oil-soluble. These polymerization initiators can be used alone or in combination of two or more. Preferably, an azo-based initiator is used.

The mixing ratio of the polymerization initiator with respect to 100 parts by mass of the monomer component is, for example, 0.005 to 1 parts by mass.

The dissolved oxygen concentration in the monomer component can be reduced by replacing the atmosphere with nitrogen before or during the blending of the polymerization initiator with the above-described monomer component.

The chain transfer agent adjusts a molecular weight of the acrylic polymer and is blended as required. A chain transfer agent which is usually used in the emulsion polymerization is used. An example thereof includes mercaptan such as 1-dodecanethiol, mercaptoacetic acid, 2-mercaptoethanol, 2-ethyl hexyl thioglycolate, and 2,3-dimethylcapto-1-propanol.

These chain transfer agents can be used alone or in combination of two or more.

The mixing ratio of the chain transfer agent with respect to 100 parts by mass of the monomer component is, for example, 0.001 to 0.5 parts by mass.

By the emulsion polymerization, the aqueous dispersion polymer is prepared as an aqueous dispersion, to be specific, an aqueous dispersion (an emulsion) in which an acrylic polymer (aqueous dispersion particles) is dispersed (emulsified) in water.

After polymerizing the above-described monomer component by, for example, a method (for example, suspension polymerization or the like) in which an organic solvent is not used, other than the emulsion polymerization, the aqueous dispersion polymer can be also prepared as an aqueous dispersion by the above-described emulsifier as required.

The average particle size of each of the aqueous dispersion particles in the aqueous dispersion polymer based on volume is, for example, 0.05 to 10 µm, preferably 0.05 to 1 µm, or more preferably 0.05 to 0.25 µm. The average particle size of each of the aqueous dispersion particles in the aqueous dispersion polymer based on volume is, for example, 0.2 µm or less, preferably 0.15 µm or less, or more preferably 0.13 µm or less, and is, for example, 0.06 µm or more, preferably 0.07 µm or more, or more preferably 0.08 µm or more.

The standard deviation of the average particle size of each of the aqueous dispersion particles in the aqueous dispersion polymer based on volume is, for example, 0.001 µm or more and 0.2 µm or less, preferably 0.005 µm or more and 0.15 µm or less, or more preferably 0.005 µm or more and 0.1 µm or less.

When the standard deviation of the average particle size based on volume is within the above-described upper limit, a reduction of the pressure-sensitive adhesive force can be effectively suppressed even in the adhesion under a high humidity atmosphere and/or a high temperature and high humidity atmosphere. The reason thereof is assumed that at the time of drying of the aqueous dispersion type oil-resistant pressure-sensitive adhesive composition, in filling spaces between the inorganic particles with the aqueous dispersion particles (in allowing the aqueous dispersion particles to stay in spaces between the inorganic particles) in the pressure-sensitive adhesive layer, a generation of a large defect is suppressed, so that a film (the pressure-sensitive adhesive layer) becomes further uniform.

The average particle size of each of the aqueous dispersion particles in the aqueous dispersion polymer based on volume and the standard deviation thereof are measured as the arithmetic average particle size and the arithmetic standard deviation, respectively, by, for example, a laser diffraction scattering particle size analyzer and a calculation software provided therewith.

The solid content concentration of the aqueous dispersion of the aqueous dispersion polymer is, for example, 10 to 80 mass %, or preferably 20 to 65 mass %.

Examples of the inorganic particles include oxide particles such as silica (silicon oxide) particles, titanium oxide particles, tin oxide particles (including antimony doped tin oxide (ATO) particles), alumina (aluminum oxide) particles, and zinc oxide particles; nitride particles such as nitride silicon particles; carbonate particles such as calcium carbonate particles; hydroxide particles such as magnesium hydroxide particles; complex oxide particles (excluding the above-described oxide particles) such as barium titanate particles; and metal particles such as gold particles, silver particles, and copper particles.

The inorganic particles can be used either in the form of powders or in the form of an aqueous dispersion. Preferably, the inorganic particles in the form of an aqueous dispersion are used. The inorganic particles in the form of an aqueous dispersion have the hydrophilic properties, so that by being blended with the aqueous dispersion polymer, the hydrophilic properties of the aqueous dispersion type oil-resistant pressure-sensitive adhesive composition are improved. Therefore, it is assumed that the aqueous dispersion type oil-resistant pressure-sensitive adhesive composition does not easily absorb oil and furthermore, the strength thereof is increased, so that the swelling of the aqueous dispersion type oil-resistant pressure-sensitive adhesive composition due to the absorption of oil can be suppressed.

A commercially available product can be used as the inorganic particles. As the silica particles, examples of the commercially available product include the Snowtex series (for example, Snowtex-XL, Snowtex-YL, Snowtex-ZL, Snowtex PST-2, Snowtex 20, Snowtex 30, Snowtex C, Snowtex O, and Snowtex 50, all of the above are in the form of an aqueous dispersion, manufactured by NISSAN CHEMICAL INDUSTRIES, LTD.); the ADELITE series (for example, ADELITE AT-40 and ADELITE AT-50, all of the above are in the form of an aqueous dispersion, manufactured by ADEKA CORPORATION); and the AEROSIL series (for example, AEROSIL R7200, in the form of powders, manufactured by Nippon Aerosil Co., Ltd.). As the ATO particles, an example thereof includes the SN-100 series (for example, SN-100S (in the form of powders), SN-100P (in the form of powders), and SN-100D (in the form of an aqueous dispersion), all of the above are manufactured by ISHIHARA SANGYO KAISHA, LTD.). As the titanium oxide particles, an example thereof includes the TTO series (in the form of powders, manufactured by ISHIHARA SANGYO KAISHA, LTD.). As the zinc oxide particles, an example thereof includes the SnO series (for example, SnO-310, SnO-350, and SnO-410, all of the above are in the form of powders, manufactured by SUMITOMO OSAKA CEMENT Co., Ltd.).

The shape of each of the inorganic particles is not particularly limited and examples of the shape thereof may include a sphere shape, a needle shape, and a plate shape. The inorganic particles include both first particles in which the particles are not aggregated with each other and are uniformly dispersed and second particles in which the particles are aggregated (second aggregated) with each other.

In addition, the inorganic particles can be subjected to a surface treatment.

As the inorganic particles, preferably, oxide particles are used, or more preferably, silica particles are used. In the case of the silica particles, a silanol group (Si-OH) on the surface of each of the silica particles reacts with a functional group (to be specific, a carboxyl group) in the reactive functional group-containing monomer, an external cross-linking agent (a carboxyl group thereof) blended as required, or the like, so that the oil-resistant properties and the heat resistance of the aqueous dispersion type oil-resistant pressure-sensitive adhesive composition can be improved.

The silica particles in the form of an aqueous dispersion can be prepared by, for example, a sol-gel method. To be specific, the silica particles in the form of an aqueous dispersion can be prepared in conformity with the description in Japanese Unexamined Patent Publication No. S53-112732 and the descriptions in Japanese Patent Publications No. S57-9051 and No. S57-51653.

The silica particles in the form of an aqueous dispersion prepared in this way are prepared as an aqueous dispersion, to be specific, a microparticle colloid solution of silicic anhydride.

To be specific, the above-described silica particles in the form of an aqueous dispersion contains, as the primary component, silicon dioxide and contains, as an accessory component, an aluminum compound such as alumina and sodium aluminate at an appropriate proportion.

Also, a stabilizer can be contained in the above-described aqueous dispersion of the silica particles at an appropriate proportion. Examples of the stabilizer include an inorganic base such as sodium hydroxide, potassium hydroxide, lithium hydroxide, and ammonia and an organic base such as tetramethyl ammonium.

The average particles size (the average of the maximum length) of each of the inorganic particles is, for example, 1 to 1000 nm. When the average particle size of each of the inorganic particles is within the above-described range, the oil-resistant properties and the heat resistance of the aqueous dispersion type oil-resistant pressure-sensitive adhesive composition can be further improved.

The average particle size of each of the inorganic particles in the form of powders is preferably 1 to 500 nm, or more preferably 1 to 200 nm. The average particle size of each of the inorganic particles in the form of an aqueous dispersion is preferably 1 to 200 nm.

The average particle size is a volume average particle size measured with a dynamic light scattering particle size distribution analyzer (for example, SUBMICRON PARTICLE SIZE ANALYZER N5, manufactured by Beckman Coulter, Inc.).

Next, a method for preparing an aqueous dispersion type oil-resistant pressure-sensitive adhesive composition of the present invention is described.

In order to prepare the aqueous dispersion type oil-resistant pressure-sensitive adhesive composition, the aqueous dispersion of the aqueous dispersion polymer and the inorganic particles prepared as in the description above are blended.

To be specific, the inorganic particles are blended in the aqueous dispersion of the aqueous dispersion polymer to be stirred and mixed.

The content ratio of the inorganic particles with respect to 100 parts by mass of the aqueous dispersion polymer (that is, the solid content in the aqueous dispersion) is 3 to 90 parts by mass. To be more specific, the content ratio of the inorganic particles with respect to 100 parts by mass of the aqueous dispersion polymer is, for example, 90 parts by mass or less, preferably 80 parts by mass or less, or more preferably 70 parts by mass or less, and is, for example, 3 parts by mass or more, or preferably 5 parts by mass or more.

When the content proportion of the inorganic particles is above the above-descried range, the aqueous dispersion type oil-resistant pressure-sensitive adhesive composition excessively becomes hard and the pressure-sensitive adhesive properties (the adhesive properties) cannot be developed. On the other hand, when the content proportion of the inorganic particles is below the above-described range, a deterioration under the environment of presence of oil and/or a reduction of the pressure-sensitive adhesive force after a long elapse of time cannot be prevented.

In this way, the aqueous dispersion type oil-resistant pressure-sensitive adhesive composition of the present invention is obtained.

Preferably, an external cross-linking agent is further blended in the aqueous dispersion type oil-resistant pressure-sensitive adhesive composition. It is assumed that the oil-resistant properties and the heat resistance of the aqueous dispersion type oil-resistant pressure-sensitive adhesive composition in which the external cross-linking agent is blended can be further improved for the reason that by the blending of the external cross-linking agent, the aqueous dispersion polymer and the inorganic particles are cross-linked (external cross-linked or post-cross-linked) to each other.

An external cross-linking agent is not particularly limited and an example thereof includes an oil-soluble or water-soluble cross-linking agent which is usually used in the external cross-linking.

The external cross-linking agent is, in a case where the monomer component contains a reactive functional group-containing vinyl monomer, a cross-linking agent which is preferably blended and is capable of reacting with a reactive functional group (to be specific, a carboxyl group (-COOH)). Examples of the external cross-linking agent include an epoxy cross-linking agent, an oxazoline cross-linking agent, a carbodiimide cross-linking agent, a hydrazine cross-linking agent, an aziridine cross-linking agent, an isocyanate cross-linking agent, and a metal chelate cross-linking agent.

Examples of the epoxy cross-linking agent include an isocyanurate skeleton-containing heterocyclic epoxy resin (to be specific, the TEPIC series such as TEPIC-G, TEPIC-P, TEPIC-S, and TEPIC-SP (manufactured by NISSAN CHEMICAL INDUSTRIES, LTD.) and the like) such as 1,3,5-tris(2,3-epoxypropyl)-1,3,5-triazine-2,4,6(1H, 3H, 5H)-trione (also known as triglycidyl isocyanurate); a nitrogen atom-containing heterocyclic epoxy resin (to be specific, the TETRAD series (manufactured by MITSUBISHI GAS CHEMICAL COMPANY, INC.) and the like) such as N,N, N',N'-tetraglycidyl-m-xylenediamine and 1,3-bis(N,N-diglycidylaminomethyl)cyclohexane; and mono-ol or polyol polyglycidyl ether (to be specific, the Denacol series (manufactured by Nagase ChemteX Corporation) and the like) such as sorbitol polyglycidyl ether, polyglycerol polyglycidyl ether, pentaerythritol polyglycidyl ether, diglycerol polyglycidyl ether, glycerol polyglycidyl ether, trimethylolpropane polyglycidyl ether, resorcinol diglycidyl ether, neopentyl glycol diglycidyl ether, 1,6-hexanediol diglycidyl ether, ethylene glycol diglycidyl ether, diethylene glycol diglycidyl ether, polyethylene glycol diglycidyl ether, propylene glycol diglycidyl ether, and polypropylene glycol diglycidyl ether.

The oxazoline cross-linking agent is, for example, an oxazoline group-containing polymer having a main chain consisting of an acrylic skeleton or a styrene skeleton and having an oxazoline group in its side chain of the main chain. Preferably, an oxazoline group-containing acrylic polymer having a main chain consisting of an acrylic skeleton and having an oxazoline group in its side chain of the main chain is used.

Examples of the oxazoline group include a 2-oxazoline group, a 3-oxazoline group, and a 4-oxazoline group. Preferably, a 2-oxazoline group is used.

The 2-oxazoline group is represented by the following general formula (2).

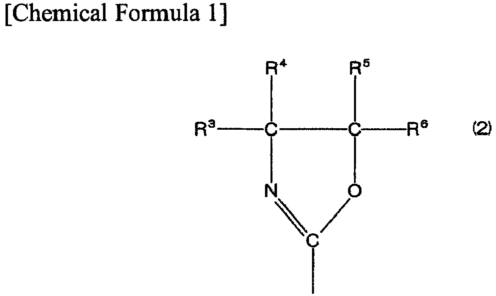

(where, in general formula (2), R³, R⁴, R⁵, and R⁶ each independently represent a hydrogen atom, a halogen atom, an alkyl group, an aralkyl group, a phenyl group, or a substituted phenyl group.)
The oxazoline value of the oxazoline cross-linking agent is, for example, 1500 g solid/eq. or less, or preferably 1200 g solid/eq. or less.

A commercially available product is used as the oxazoline cross-linking agent. To be specific, an example thereof includes the EPOCROS series (manufactured by NIPPON SHOKUBAI CO., LTD.) such as the EPOCROS WS series (an aqueous solution type) including EPOCROS WS-500 and EPOCROS WS-700 and the EPOCROS K series (an aqueous dispersion type) including EPOCROS K-1000 and EPOCROS K-2000.

The carbodiimide cross-linking agent is a compound having a carbodiimide group. The carbodiimide group is a functional group (-N=C=NH) in which one hydrogen atom is abstracted from carbodiimide (HN=C=NH) or a functional group (-N=C=N-) in which two hydrogen atoms are abstracted therefrom. The carbodiimide group is capable of reacting with a carboxyl group.

To be more specific, examples of the carbodiimide cross-linking agent include a low molecular weight compound or a high molecular weight compound each having two or more carbodiimide groups.

The low molecular weight compound having carbodiimide groups is, for example, represented by the following general formula (3).

R⁷-N=C=N-R⁸-N=C=N-R⁹ (3)

(where, in general formula (3), R⁷, R⁸, and R⁹ are different from each other and each represents a hydrocarbon group.)
The high molecular weight compound having carbodiimide groups is polycarbodiimide. Preferably, a high molecular weight compound having a portion which has excellent affinity with water, to be specific, having an ethyleneoxide (-CH₂-CH₂-O-) portion is used.

A commercially available product is used as the high molecular weight compound having carbodiimide groups. To be specific, an example thereof includes the CARBODILITE series (manufactured by NISSHINBO INDUSTRIES, INC.) such as the CARBODILITE V series (an aqueous solution type) including CARBODILITE V-02, CARBODILITE V-02-L2, and CARBODILITE V-04 and the CARBODILITE E series (an aqueous dispersion type) including CARBODILITE E-01, CARBODILITE E-02, and CARBODILITE E-04.

The hydrazine cross-linking agent is a hydrazino group-containing compound having a hydrazino group (H₂N-NH-). To be specific, examples thereof include polyhydrazide polycarboxylic acid such as dihydrazide oxalic acid, dihydrazide malonic acid, dihydrazide glutaric acid, dihydrazide succinic acid, dihydrazide adipic acid, dihydrazide, azelaic acid, dihydrazide sebacic acid, dihydrazide dodecanedioic acid, dihydrazide maleic acid, dihydrazide fumaric acid, dihydrazide diglycolic acid, dihydrazide tartaric acid, dihydrazide malic acid, dihydrazide isophthalic acid, dihydrazide terephthalic acid, trihydrazide citric acid, and 7,11-ocatadecadiene-1,18-dicaxbohydrazide and hydantoin such as 1,3-bis(hydrazinocarbonoethyl)-5-isopropylhydantoin.

A commercially available product is used as the hydrazine cross-linking agent. To be specific, examples thereof include the Amicure series (manufactured by Ajinomoto Fine-Techno Co., Inc.) such as Amicure VDH (7,11-octadecadiene-1,18-dicarbohydrazide), and Amicure UDH (1,3-bis(hydrazinocarbonoethyl)-5-isopropylhydantoin).

The aziridine cross-linking agent is an aziridine ring-containing compound having an aziridine ring. Examples thereof include 2,2'-bishydroxymethylbutanol-tris[3-(1-aziridinyl propionate] and 4,4'-bis(ethylenediaminocarbonylamino)diphenylmethane.

A commercially available product is used as the aziridine cross-linking agent. An example thereof includes the CHEMITITE series (manufactured by NIPPON SHOKUBAI CO., LTD.) such as CHEMITITE PZ-33 and CHEMITITE DZ-22E.

The isocyanate cross-linking agent is an isocyanate group-containing cross-linking agent having an isocyanate group. An example thereof includes block isocyanate (to be specific, the ELASTRON BN series (manufactured by DAI-ICHI KOGYO SEIYAKU CO., LTD.)).

An example of the metal chelate cross-linking agent includes a chelate compound (to be specific, the Orgatics series (manufactured by Matsumoto Fine Chemical Co., Ltd.) such as zirconium chelate, titanium chelate, and aluminum chelate.

These external cross-linking agents can be used alone or in combination of two or more.

As the external cross-linking agent, preferably, an epoxy cross-linking agent, an oxazoline cross-linking agent, and a carbodiimide cross-linking agent are used.

The mixing ratio of the external cross-linking agent with respect to 100 parts by mass of the aqueous dispersion polymer is, for example, 0.001 to 10 parts by mass, preferably 0.01 to 5 parts by mass, or more preferably 0.01 to 2 parts by mass. When the mixing proportion of the external cross-linking agent is below the above-described range, there may be a case where the degree of cross-linking is reduced and the oil-resistant properties and the heat resistance cannot be sufficiently improved.

The external cross-linking agent is blended in the aqueous dispersion of the aqueous dispersion polymer at, for example, room temperature and by the blending thereof or by the subsequent heating and drying (described later), the cross-linking reaction is performed.

Also, the external cross-linking agent can be blended in the aqueous dispersion polymer at the same time with or after the blending of the inorganic particles.

An additive can be added to the aqueous dispersion type oil-resistant pressure-sensitive adhesive composition at an appropriate proportion as required. Examples of the additive include pH modifiers, tackifiers, release modifiers, plasticizers, softeners, oxidation inhibitors, and surfactants. The additive is added after the preparation of the aqueous dispersion polymer and the inorganic particles or after the blending thereof.

Examples of the pH modifier include a base such as aqueous ammonia and an acid. Preferably, a base is used. The pH modifier is added to the aqueous dispersion polymer, so that a pH is adjusted to be, for example, 7 to 9, or preferably 7 to 8.

Examples of the tackifier include a rosin resin, a terpene resin, an aliphatic petroleum resin, an aromatic petroleum resin, a copolymer petroleum resin, an alicyclic petroleum resin, a xylene resin, and an elastomer.

FIG 1 shows sectional views for illustrating a method for allowing one embodiment of an oil-resistant pressure-sensitive adhesive sheet of the present invention to adhere to an adherend.

Next, one example of a method for producing an oil-resistant pressure-sensitive adhesive sheet including a pressure-sensitive adhesive layer prepared from the above-described aqueous dispersion type oil-resistant pressure-sensitive adhesive composition is described with reference to FIG 1.

In FIG. 1 (a), an oil-resistant pressure-sensitive adhesive sheet 1 includes a substrate 2 and a pressure-sensitive adhesive layer 3 which is laminated on one-side surface in the thickness direction (hereinafter, simply referred to as one-side surface, one surface) of the substrate 2.

Examples of a material for forming the substrate 2 include a synthetic resin film such as a polypropylene film, an ethylene-propylene copolymer film, a polyester film (to be specific, a polyethylene terephthalate film and the like), polyvinyl chloride, polyimide, and polytetrafluoroethylene; paper such as Japanese paper and kraft paper; a cloth such as a cotton cloth and a staple fiber cloth; a non-woven fabric such as a polyester non-woven fabric and a vinylon non-woven fabric; and a metal foil such as an aluminum foil and a copper foil. Preferably, a synthetic resin film is used. As the synthetic resin film, either a non-stretched film or a stretched (uniaxially stretched or biaxially stretched) film can be used.

The one-side surface (the surface on which the aqueous dispersion type oil-resistant pressure-sensitive adhesive composition is laminated) of the substrate 2 can be subjected to a surface treatment by a primer, a corona discharge, or the like.

The thickness of the substrate 2 can be appropriately selected in accordance with its purpose and is, for example, 10 to 500 µm.

Next, the above-described aqueous dispersion type oil-resistant pressure-sensitive adhesive composition is applied to the one-side surface of the substrate 2.

In order to apply the aqueous dispersion type oil-resistant pressure-sensitive adhesive composition to the one-side surface of the substrate 2, for example, a coater such as a gravure coater, a reverse roll coater, a kiss roll coater, a dip roll coater, a bar coater, a knife coater, and a spray coater is used.

Thereafter, the aqueous dispersion type oil-resistant pressure-sensitive adhesive composition is heated and dried. The heating temperature is, for example, 40 to 150°C, or preferably 60 to 125°C and a heating duration is, for example, 1 to 10 minutes, or preferably 2 to 5 minutes.

In this way, the pressure-sensitive adhesive layer 3 prepared from the aqueous dispersion type oil-resistant pressure-sensitive adhesive composition is formed on the one-side surface of the substrate 2.

The thickness of the pressure-sensitive adhesive layer 3 is, for example, 1 to 1000 µm, or preferably 5 to 500 µm.

In this way, the oil-resistant pressure-sensitive adhesive sheet 1 can be obtained.

A known release sheet 5 can be also laminated on the one-side surface (the opposite surface to the opposing surface (the other-side surface) to the substrate 2 in the pressure-sensitive adhesive layer 3) of the pressures-sensitive adhesive layer 3 as required.

The pressure-sensitive adhesive layer 3 is formed by being applied to the release sheet 5 to be dried and thereafter, the pressure-sensitive adhesive layer 3 can be transferred to the one-side surface of the substrate 2.

The oil-resistant pressure-sensitive adhesive sheet 1 contains the aqueous dispersion polymer and the inorganic particles at a predetermined proportion, so that the oil-resistant pressure-sensitive adhesive 1 has excellent oil-resistant properties and an excellent heat resistance. That is, a deterioration and/or a reduction of the pressure-sensitive adhesive force after a long elapse of time can be prevented.

Therefore, even when the pressure-sensitive adhesive layer 3 in the oil-resistant pressure-sensitive adhesive sheet 1 described above is allowed to adhere to an adherend 4 disposed under the environment of presence of oil, the pressure-sensitive adhesive force with respect to the adherend 4 can be retained. In addition, even when the atmosphere in such an environment is subjected to high temperature, the pressure-sensitive adhesive force with respect to the above-described adherend 4 can be also retained.

In order to allow the pressure-sensitive adhesive layer 3 in the oil-resistant pressure-sensitive adhesive sheet 1 to adhere to the adherend 4, as shown by a phantom line in FIG 1 (a), first, the release sheet 5 is peeled from the pressure-sensitive adhesive layer 3 and next, as shown in FIG 1 (b), the pressure-sensitive adhesive layer 3 is allowed to adhere to the adherend 4 to be subsequently compressively bonded thereto.

The environment in which oil is present is defined as a state of being always soaked in the oil; a state of being intermittently applied by the oil; or a state of not allowing the oil to be removed after adhesion in the temperature ranges of, for example, a low temperature (below 20°C), a normal temperature (about 20 to 25C°), and a high temperature (above 25°C). Furthermore, the environment in which oil is present is also defined as a state of being filled with oil mist by heating or the like in an open space or a state of being filled with oil mist in a pressurized state by heating or the like in a sealed space.

To be specific, the environment in which oil is present refers to a state of being completely soaked in the oil under an atmosphere of 60 to 200°C, or furthermore 100 to 150°C (to be specific, about 130°C), a state of being filled with oil mist, or the like.

Examples of the adherend 4 disposed under the above-described environment include a cooking place (a kitchen and the like) in which a cooking oil or the like is possibly dispersed or is possibly allowed to adhere and a building around the cooking place (an inner wall, an outer wall, and the like), and a material used inside or around the building (various devices or various components, or other various appliances); a building (an inner wall, an outer wall, and the like) in a place (a production factory or a repair shop for automobiles, automobile components, or the like) in which an oil for lubrication, cooling, or hydraulic pressure is dispersed, and a material used inside or around the building (various devices or various components, or other various appliances); a motor such as an engine in which oil is always present and the oil is used for the purpose of lubrication, cooling, or hydraulic pressure; a speed change gear such as a transmission and a drive transmission device; a hydraulic power unit in which power is transmitted by hydraulic pressure such as a hydraulic brake; a device in which power is transmitted by a wire or the like; and a pumping device such as a compressor and a decompression pump.

The oil-resistant adhesive structure obtained by allowing the oil-resistant pressure-sensitive adhesive sheet 1 to adhere to the above-described adherend 4 can be used for various industrial products. To be specific, examples of the adhesive structure include a device in which the oil-resistant pressure-sensitive adhesive sheet 1 is allowed to adhere to the inside thereof and a fixed structure or a bonded structure in which the above-described device or a member around the device is fixed or bonded by the oil-resistant pressure-sensitive adhesive sheet 1.

Although not shown, the oil-resistant pressure-sensitive adhesive sheet 1 can be used for binding of the adherend 4.

In addition, as shown by the phantom line in FIG. 1 (b), for example, when an opening 6 such as a joint or a hole is formed in the above-described adherend 4, the oil-resistant pressure-sensitive adhesive sheet 1 is allowed to adhere to the adherend 4 so as to cover (block) the opening 6. In this way, the oil-resistant pressure-sensitive adhesive sheet 1 can be used as a shielding (blocking) sheet which shields the flow of the oil mist via the opening 6.

The above-described oil-resistant pressure-sensitive adhesive sheet 1 is also used in fixing or bonding of the adherend 4 disposed under the environment of presence of oil, other than the above-described adherend 4.

Furthermore, even when the pressure-sensitive adhesive layer 3 in the oil-resistant pressure-sensitive adhesive sheet 1 described above is allowed to adhere to the adherend 4 disposed under a high humidity atmosphere and/or a high temperature and high humidity atmosphere, the pressure-sensitive adhesive force with respect to the adherend 4 can be retained.

To be specific, the pressure-sensitive adhesive force (described in detail in Examples) of the pressure-sensitive adhesive layer 3 after being stored at high temperature and high humidity is, for example, 14 N/20 mm or more, or preferably 16 N/20 mm or more, and is, for example, 50 N/20 mm or less.

The ratio (described in detail in Examples later) of the pressure-sensitive adhesive force of the pressure-sensitive adhesive layer 3 after being stored at high temperature and high humidity with respect to that of the pressure-sensitive adhesive layer 3 at normal temperature and normal humidity is, for example, 80 % or more, preferably 90 % or more, more preferably 130 % or more, or particularly preferably 150 % or more, and is, for example, 300 % or less.

Accordingly, the above-described oil-resistant pressure-sensitive adhesive sheet 1 can also serve as an oil-resistant and humidity-resistant pressure-sensitive adhesive sheet 1 and/or an oil-resistant, heat-resistant, and humidity-resistant pressure-sensitive adhesive sheet 1. The oil-resistant adhesive structure can also serve as an oil-resistant and humidity resistant adhesive structure and/or an oil-resistant, heat-resistant, and humidity-resistant adhesive structure.

FIG 2 shows a sectional view for illustrating a method for allowing another embodiment (an embodiment in which a pressure-sensitive adhesive layer is laminated on both-side surfaces of a substrate) of an oil-resistant pressure-sensitive adhesive sheet of the present invention to adhere to an adherend. FIG 3 shows a sectional view for illustrating a method for allowing another embodiment (an embodiment in which a substrate is not provided) of an oil-resistant pressure-sensitive adhesive sheet of the present invention to adhere to an adherend. In FIGS. 2 and 3, the same reference numerals are provided for members corresponding to each of those in FIG. 1, and their detailed description is omitted.

In the above-described description in FIG 1, the pressure-sensitive adhesive layer 3 is formed on the one-side surface of the substrate 2. Alternatively, for example, as shown in FIG 2, the pressure-sensitive adhesive layer 3 can be also formed on both-side surfaces of the one-side surface and the other-side surface of the substrate 2.

In such a case, the oil-resistant pressure-sensitive adhesive sheet 1 can be allowed to adhere (connected) to two pieces of adherends 4 (the phantom lines in FIG 2). That is, the one-side and the other-side of the pressure-sensitive adhesive layer 3 can be allowed to adhere to the respective adherends 4.

Furthermore, it is also possible that the pressure-sensitive adhesive layer 3 is not formed on any surfaces of the substrate 2 and the substrate-less oil-resistant pressure-sensitive adhesive sheet 1, which consists of the pressure-sensitive adhesive layer 3 only, is formed.

The oil-resistant pressure-sensitive adhesive sheet 1 can be obtained by laminating the pressure-sensitive adhesive layer 3 on a known release sheet 5.

In order to allow the oil-resistant pressure-sensitive adhesive sheet 1 to adhere to the two pieces of adherends 4, for example, the pressure-sensitive adhesive layer 3 is allowed to adhere to one adherend 4 and thereafter, the pressure-sensitive adhesive layer 3 is allowed to adhere to the other adherend 4.

The oil-resistant pressure-sensitive adhesive film of the present invention can be also used as, for example, an oil-resistant pressure-sensitive adhesive sheet, an oil-resistant pressure-sensitive adhesive tape, or the like.

### Examples

The present invention will now be described in more detail by way of Examples and Comparative Examples. However, the present invention is not limited to the following Examples and Comparative Examples.

In the following description, the units "part(s)" and "%" are based on mass, unless otherwise noted.

### Example 1

95 parts of a butyl acrylate, 5 parts of an acrylic acid, and 0.05 parts of 1-dodecanethiol were added to an emulsion aqueous solution in which 1 part of ammonium polyoxyethylene alkyl sulfate ("HITENOL LA-16", manufactured by DAI-ICHI KOGYO SEIYAKU CO., LTD.) and 89 parts of water were blended to be emulsified, so that a monomer emulsion was prepared.

Next, in a reaction vessel equipped with a condenser tube, a nitrogen introducing tube, a thermometer, and a stirrer, 44 parts of water and 2 parts of ammonium polyoxyethylene alkyl sulfate ("HITENOL LA-16", manufactured by DAI-ICHI KOGYO SEIYAKU CO., LTD.) were added to prepare an emulsion aqueous solution. One-fourth mass of the above-described monomer emulsion was added to the prepared emulsion aqueous solution; then, the atmosphere in the reaction vessel was replaced with nitrogen for 1 hour; thereafter, the temperature was increased to 60°C; and 0.1 parts of 2,2'-azobis[N-(2-carboxyethyl)-2-methylpropioneamidine] hydrate (trade name: VA-057, manufactured by Wako Pure Chemical Industries, Ltd.) was added thereto to be polymerized for 1 hour. Thereafter, the remaining third-fourth mass of the above-described monomer emulsion was added dropwise into the reaction vessel over 3 hours to be matured for 3 hours, so that an emulsion (the solid content concentration of 43.7 %) of an aqueous dispersion polymer (an acrylic polymer) was obtained.

Thereafter, a pH was adjusted to be 8 by adding 10 % aqueous ammonia to the obtained emulsion of the aqueous dispersion polymer. Next, 0.05 parts of an epoxy cross-linking agent (TEPIC-G, an isocyanurate skeleton-containing heterocyclic epoxy resin, manufactured by NISSAN CHEMICAL INDUSTRIES, LTD.), as an external cross-linking agent, and 10 parts (5 parts in the solid content) of silica particles in the form of an aqueous dispersion (an average particle size of about 40 nm, ADELITE AT-50, the solid content concentration of 50 %, manufactured by ADEKA CORPORATION) with respect to 100 parts of the aqueous dispersion polymer (the solid content) were added to the emulsion at room temperature, so that an aqueous dispersion type oil-resistant pressure-sensitive adhesive composition was obtained.

The obtained aqueous dispersion type oil-resistant pressure-sensitive adhesive composition was applied to the surface of a polyethylene terephthalate sheet so as to have a thickness of 50 µm after drying and the applied sheet was dried at 120°C for 3 minutes, so that a pressure-sensitive adhesive layer was formed. In this way, an oil-resistant pressure-sensitive adhesive sheet was obtained.

In the pressure-sensitive adhesive layer in the obtained oil-resistant pressure-sensitive adhesive sheet, the aggregation of the silica particles was not confirmed and the pressure-sensitive adhesive layer was substantially uniform.

### Example 2

An aqueous dispersion type oil-resistant pressure-sensitive adhesive composition was obtained and subsequently, an oil-resistant pressure-sensitive adhesive sheet was obtained in the same manner as in Example 1, except that the mixing amount of the silica particles in the form of an aqueous dispersion with respect to 100 parts of the aqueous dispersion polymer (the solid content) was changed to 20 parts (10 parts in the solid content).

In the pressure-sensitive adhesive layer in the obtained oil-resistant pressure-sensitive adhesive sheet, the aggregation of the silica particles was not confirmed and the pressure-sensitive adhesive layer was substantially uniform.

### Example 3

An aqueous dispersion type oil-resistant pressure-sensitive adhesive composition was obtained and subsequently, an oil-resistant pressure-sensitive adhesive sheet was obtained in the same manner as in Example 1, except that the mixing amount of the silica particles in the form of an aqueous dispersion with respect to 100 parts of the aqueous dispersion polymer (the solid content) was changed to 40 parts (20 parts in the solid content).

In the pressure-sensitive adhesive layer in the obtained oil-resistant pressure-sensitive adhesive sheet, the aggregation of the silica particles was not confirmed and the pressure-sensitive adhesive layer was substantially uniform.

### Example 4

An aqueous dispersion type oil-resistant pressure-sensitive adhesive composition was obtained and subsequently, an oil-resistant pressure-sensitive adhesive sheet was obtained in the same manner as in Example 1, except that the mixing amount of the silica particles in the form of an aqueous dispersion with respect to 100 parts of the aqueous dispersion polymer was changed to 120 parts (60 parts in the solid content).

In the pressure-sensitive adhesive layer in the obtained oil-resistant pressure-sensitive adhesive sheet, the aggregation of the silica particles was not confirmed and the pressure-sensitive adhesive layer was substantially uniform.

### Example 5

An aqueous dispersion type oil-resistant pressure-sensitive adhesive composition was obtained and subsequently, an oil-resistant pressure-sensitive adhesive sheet was obtained in the same manner as in Example 1, except that 0.25 parts (0.1 parts in the solid content) of an oxazoline cross-linking agent (EPOCROS WS-500, an oxazoline cross-linking agent, an aqueous solution type, the solid content concentration of 40 %, the main chain: an acylic type, a pH of 7 to 9, the oxazoline value: 200 g solid/eq., manufactured by NIPPON SHOKUBAI CO., LTD.), as an external cross-linking agent, was added instead of 0.05 parts of the epoxy cross-linking agent (TEPIC-G).

In the pressure-sensitive adhesive layer in the obtained oil-resistant pressure-sensitive adhesive sheet, the aggregation of the silica particles was not confirmed and the pressure-sensitive adhesive layer was substantially uniform.

### Example 6

An aqueous dispersion type oil-resistant pressure-sensitive adhesive composition was obtained and subsequently, an oil-resistant pressure-sensitive adhesive sheet was obtained in the same manner as in Example 1, except that 0.25 parts (0.1 parts in the solid content) of a carbodiimide cross-linking agent (CARBODILITE V-04, an aqueous solution type, the solid content concentration of 40 %, manufactured by NISSHINBO INDUSTRIES, INC.), as an external cross-linking agent, was added instead of 0.05 parts of the epoxy cross-linking agent (TEPIC-G).

In the pressure-sensitive adhesive layer in the obtained oil-resistant pressure-sensitive adhesive sheet, the aggregation of the silica particles was not confirmed and the pressure-sensitive adhesive layer was substantially uniform.

### Example 7

In a reaction vessel equipped with a condenser tube, a nitrogen introducing tube, a thermometer, and a stirrer, 0.1 parts of 2,2'-azobis[N-(2-carboxyethyl)-2-methylpropioneamidine] hydrate (trade name: VA-057, manufactured by Wako Pure Chemical Industries, Ltd.) and 40 parts of ion exchanged water were put in a separable flask and the obtained mixture was stirred for 1 hour while a nitrogen gas was introduced, so that an initiator aqueous solution was prepared.

A monomer emulsion obtained by adding 90 parts of a butyl acrylate, 10 parts of a 2-ethylhexyl acrylate, 4 parts of an acrylic acid, 8 parts of a 26 % aqueous solution of sodium polyoxyethylene alkyl ether sulfate (LATEMUL E-118 B, manufactured by Kao Corporation), 0.05 parts of 1-dodecanethiol, and 0.05 parts of 3-methacryloyloxypropyl trimethoxysilane (KBM-503, manufactured by Shin-Etsu Chemical Co., Ltd.) to 24 parts of water to be emulsified was added dropwise to the initiator aqueous solution prepared in the description above over 4 hours to be polymerized to be then matured for 3 hours, so that an emulsion (the solid content concentration of 60.3 %) of an aqueous dispersion polymer (an acrylic polymer) was obtained.

Thereafter, a pH was adjusted to be 8 by adding 10 % aqueous ammonia to the obtained emulsion of the aqueous dispersion polymer. Next, 40 parts (20 parts in the solid content) of silica particles in the form of an aqueous dispersion (an average particle size of about 40 nm, ADELITE AT-50, the solid content concentration of 50 %, manufactured by ADEKA CORPORATION) with respect to 100 parts of the aqueous dispersion polymer (the solid content) was added to the emulsion, so that an aqueous dispersion type oil-resistant pressure-sensitive adhesive composition was obtained.

The obtained aqueous dispersion type oil-resistant pressure-sensitive adhesive composition was applied to the surface of a polyethylene terephthalate sheet so as to have a thickness of 50 µm after drying and the applied sheet was dried at 120°C for 3 minutes, so that a pressure-sensitive adhesive layer was formed. In this way, an oil-resistant pressure-sensitive adhesive sheet including the pressure-sensitive adhesive layer was obtained.

In the pressure-sensitive adhesive layer in the obtained oil-resistant pressure-sensitive adhesive sheet, the aggregation of the silica particles was not confirmed and the pressure-sensitive adhesive layer was substantially uniform.

### Comparative Example 1

An aqueous dispersion type pressure-sensitive adhesive composition was obtained and subsequently, a pressure-sensitive adhesive sheet was obtained in the same manner as in Example 1, except that in Example 1, the silica particles in the form of an aqueous dispersion were not added.

### Comparative Example 2

An aqueous dispersion type pressure-sensitive adhesive composition was obtained and subsequently, a pressure-sensitive adhesive sheet was obtained in the same manner as in Example 1, except that the mixing amount of the silica particles in the form of an aqueous dispersion with respect to 100 parts of the solid content of the aqueous dispersion polymer was changed to 2 parts (1 part in the solid content).

In the pressure-sensitive adhesive layer in the obtained pressure-sensitive adhesive sheet, the aggregation of the silica particles was not confirmed and the pressure-sensitive adhesive layer was substantially uniform.

### Comparative Example 3

An aqueous dispersion type pressure-sensitive adhesive composition was obtained and subsequently, a pressure-sensitive adhesive sheet was obtained in the same manner as in Example 1, except that the mixing amount of the silica particles in the form of an aqueous dispersion with respect to 100 parts of the solid content of the aqueous dispersion polymer was changed to 200 parts (100 parts in the solid content).

In the pressure-sensitive adhesive layer in the obtained pressure-sensitive adhesive sheet, the aggregation of the silica particles was not confirmed and the pressure-sensitive adhesive layer was substantially uniform.

### Comparative Example 4

In a reaction vessel equipped with a condenser tube, a nitrogen introducing tube, a thermometer, and a stirrer, 95 parts of a butyl acrylate, 5 parts of an acrylic acid, 150 parts of toluene, and 0.1 parts of 2,2'-azobisisobutyronitrile (AIBN) were put to be polymerized (to be subjected to solution polymerization) at 60°C for 8 hours, so that a solvent solution type acrylic polymer solution was obtained.

2.67 parts (2 parts in the solid content) of an oil-soluble isocyanate cross-linking agent solution (Colonate L, the solid content concentration of 75 %, manufactured by NIPPON POLYURETHANE INDUSTRY CO., LTD.), as an external cross-linking agent, was added with respect to 100 parts of the solid content of the obtained solvent solution type acrylic polymer solution, so that a solvent solution type pressure-sensitive adhesive composition was obtained.

The obtained solvent solution type pressure-sensitive adhesive composition was applied to the surface of a polyethylene terephthalate sheet so as to have a thickness of 50 µm after drying and the applied sheet was dried at 120°C for 3 minutes, so that a pressure-sensitive adhesive layer was formed. In this way, a pressure-sensitive adhesive sheet including the pressure-sensitive adhesive layer was obtained.

### Comparative Example 5

A solvent solution type pressure-sensitive adhesive composition was obtained and subsequently, a pressure-sensitive adhesive sheet was obtained in the same manner as in Comparative Example 4, except that in addition to the oil-soluble isocyanate cross-linking agent solution (Colonate L, the solid content concentration of 75 %, manufactured by NIPPON POLYURETHANE INDUSTRY CO., LTD.), as an external cross-linking agent, 20 parts of silica particles (AEROSIL R7200, in the form of powders, an average particle size of about 12 nm, manufactured by Nippon Aerosil Co., Ltd.) were further added with respect to 100 parts of the solid content of the solvent solution type acrylic polymer solution.

In the pressure-sensitive adhesive layer in the obtained pressure-sensitive adhesive sheet, the aggregation of the silica particles was confirmed and the pressure-sensitive adhesive layer was non-uniform.

The mixing formulation of Examples and Comparative Examples was shown in Table 1.

[Table 1]

**Table 1**

| Ex. Comp. Ex. | Mixing Formulation | | | | | | | Evaluation | | |
|---|---|---|---|---|---|---|---|---|---|---|
| | | | | | | | | Pressure-Sensitive Adhesive Properties Test | | |
| | Polymer (Acrylic Polymer) | Average Particle Size (µm) | Standard Deviation (µm) | Inorganic Particles | Content Proportion (parts) (Solid Content vs 100 parts of Polymer) | External Cross-Linking Agent | Mixing Proportion (parts) (Solid Content vs 100 parts of Polymer) | Pressure-Sensitive Adhesive Force at Normal Temperature and Normal Humidity (N/20 mm) | Pressure-Sensitive Adhesive Force after Being Soaked in Oil (Oil-Resistant Pressure-Sensitive Adhesive Force) (N/20 mm) | Ratio of Pressure-Sensitive Adhesive Force after Being Stored at High Temperature and High Humidity to Pressure-Sensitive Adhesive Force at Normal Temperature and Normal Humidity (%) |
| Ex. 1 | Emulsion | 0.11 | 0.03 | AT-50 | 5 | TEPIC-G | 0.05 | 8.8 | 18.7 | 122 |
| Ex. 2 | Emulsion | 0.11 | 0.03 | AT-50 | 10 | TEPIC-G | 0.05 | 9.8 | 19.8 | 146 |
| Ex. 3 | Emulsion | 0.11 | 0.03 | AT-50 | 20 | TEPIC-G | 0.05 | 9.7 | 18.8 | 163 |
| Ex. 4 | Emulsion | 0.11 | 0.03 | AT-50 | 60 | TEPIC-G | 0.05 | 7.8 | 11.5 | 123 |
| Ex. 5 | Emulsion | 0.11 | 0.03 | AT-50 | 5 | EPOCROS WS-500 | 0.1 | 8.3 | 17.6 | 114 |
| Ex. 6 | Emulsion | 0.11 | 0.03 | AT-50 | 5 | CARBODILITEV-04 | 0.1 | 8.1 | 18.2 | 118 |
| Ex. 7 | Emulsion | 0.27 | 0.21 | AT-50 | 5 | - | | 8.3 | 12.8 | 42 |
| Comp. Ex. 1 | Emulsion | 0.11 | 0.03 | - | | TEPIC-G | 0.05 | 8.2 | Aggregation Failure | 96 |
| Comp. Ex. 2 | Emulsion | 0.11 | 0.03 | AT-50 | 1 | TEPIC-G | 0.05 | 7.0 | Aggregation Failure | 102 |
| Comp. Ex.3 | Emulsion | 0.11 | 0.03 | AT-50 | 100 | TEPIC-G | 0.05 | No Sufficient Adhesion | No Sufficient Adhesion | - |
| Comp. Ex. 4 | Solvent Solution Type | - | | - | | Colonate L | 2 | 10.3 | 5.7 | 125 |
| Comp. Ex. 5 | Solvent Solution type | - | | R7200 | 20 | Colonate L | 2 | No sufficient Adhesion | No Sufficient Adhesion | - |

The abbreviations of the inorganic particles and the external cross-linking agents in Table 1 are given in the following.
AT-50: trade name "ADELITE AT-50", silica particles in the form of an aqueous dispersion, an average particle size of about 40 nm, the solid content concentration of 50 %, manufactured by ADEKA CORPORATION
R7200: trade name "AEROSIL R7200", silica particles in the form of powders, an average particle size of about 12 nm, manufactured by Nippon Aerosil Co., Ltd.
TEPIC-G: trade name, an epoxy cross-linking agent (an isocyanurate skeleton-containing heterocyclic epoxy resin, manufactured by NISSAN CHEMICAL INDUSTRIES, LTD.
EPOCROS WS-500: trade name, an oxazoline cross-linking agent, an aqueous solution type, the solid content concentration of 40 %, the main chain: an acylic type, a pH of 7 to 9, the oxazoline value: 200 g solid/eq., manufactured by NIPPON SHOKUBAI CO., LTD.
CARBODILITE V-04: trade name, a carbodiimide cross-linking agent, an aqueous solution type, the solid content concentration of 40 %, manufactured by NISSHINBO INDUSTRIES, INC.
Colonate L: trade name, an oil-soluble isocyanate cross-linking agent, the solid content concentration of 75 %, manufactured by NIPPON POLYURETHANE INDUSTRY CO., LTD.

### (Evaluation)

### 1. Average Particle Size and Standard Deviation of Aqueous Dispersion Particles in Aqueous Dispersion Polymer

The average particle size and the standard deviation of each of the aqueous dispersion particles in the aqueous dispersion polymers in Examples 1 to 7 and Comparative Examples 1 to 3 based on volume were measured using a laser diffraction scattering particle size analyzer (LS13 320, a laser light source: a laser diode and a tungsten lamp, a wavelength of 450 to 900 nm, manufactured by Beckman Coulter, Inc.).

The results are shown in Table 1.

### 2. Pressure-Sensitive Adhesive Properties Test

### (1) Pressure-Sensitive Adhesive Force at Normal Temperature (Pressure-Sensitive Adhesive Force at Normal Temperature and Normal Humidity)

The oil-resistant pressure-sensitive adhesive sheets in Examples and the pressure-sensitive adhesive sheets in Comparative Examples were cut into pieces each having a width of 20 mm and a length of 40 mm to prepare samples. The pressure-sensitive adhesive layer of each of the samples was allowed to adhere to the surface of an aluminum board. Next, the sample was compressively bonded to the aluminum board by one reciprocation of a 2-kg rubber roller to be then allowed to stand at 23°C for 30 minutes. Thereafter, a peel test (180-degree peel, a peeling rate of 300 mm/min) was performed under an atmosphere of 23°C and a humidity of 50 %RH. The measured peeling force was defined as the pressure-sensitive adhesive force at normal temperature (the pressure-sensitive adhesive force at normal temperature and normal humidity).

### (2) Pressure-Sensitive Adhesive Force after Being Soaked in Oil (Oil-Resistant Pressure-Sensitive Adhesive Force and Heat-Resistant Pressure-Sensitive Adhesive Force)

The aluminum board to which the sample was compressively bonded as described above to be allowed to stand at 23°C for 30 minutes was soaked in an oil (trade name: Shell Vitrea Oil 32, manufactured by Showa Shell Sekiyu K.K.) to be stored under an atmosphere of 130°C for 7 days. Thereafter, the aluminum board was taken out from the oil and a peel test (180-degree peel, a peeling rate of 300 mm/min) was performed under an atmosphere of 23°C. The measured peeling force was defined as the pressure-sensitive adhesive force after being soaked in the oil.

The results are shown in Table 1.

As shown clearly in Table 1, in Comparative Example 1 in which the silica particles were not contained, an aggregation failure was confirmed in the pressure-sensitive adhesive properties test after being soaked in the oil and the pressure-sensitive adhesive layer was deteriorated. In Comparative Example 2 in which the silica particles were contained and the mixing ratio thereof with respect to 100 parts by mass of the aqueous dispersion polymer was 1 part by mass, the aggregation failure was also confirmed in the pressure-sensitive adhesive properties test after being soaked in the oil and the pressure-sensitive adhesive layer was deteriorated. In Comparative Example 3 in which the silica particles were contained and the mixing ratio thereof with respect to 100 parts by mass of the aqueous dispersion polymer was 100 parts by mass, the pressure-sensitive adhesive layer excessively becomes hard and the pressure-sensitive adhesive properties (the adhesive properties) could not be developed.

In the pressure-sensitive adhesive layer of Comparative Example 4 in which the silica particles were not contained and which was prepared from a solvent solution type polymer, the pressure-sensitive adhesive force after being soaked in the oil was reduced, compared to the pressure-sensitive adhesive force at normal temperature. The pressure-sensitive adhesive layer of Comparative Example 5 in which the silica particles were contained and which was prepared from a solvent solution type polymer excessively became hard and the pressure-sensitive adhesive properties (the adhesive properties) could not be developed.

With respect to those Comparative Examples, in Examples in which the silica particles were contained in a predetermined proportion, the aggregation failure was not confirmed in the pressure-sensitive adhesive properties test after being soaked in the oil and furthermore, the pressure-sensitive adhesive force after being soaked in the oil was increased, compared to the pressure-sensitive adhesive force at normal temperature.

### (3) Pressure-Sensitive Adhesive Force at Normal Temperature and Normal Humidity of Pressure-Sensitive Adhesive Force after Being Stored at High Temperature and High Humidity

The oil-resistant pressure-sensitive adhesive sheets in Examples and the pressure-sensitive adhesive sheets in Comparative Examples were cut into pieces each having a width of 20 mm and a length of 40 mm to prepare samples. The pressure-sensitive adhesive layer of each of the samples was allowed to adhere to the surface of an aluminum board. Next, the sample was compressively bonded to the aluminum board by one reciprocation of a 2-kg rubber roller.

Thereafter, the resulting product was put in a high temperature and high humidity chamber at 85°C/90 %RH and the sample was taken out after the elapse of 1000 hours.

Thereafter, a peel test (180-degree peel, a peeling rate of 300 mm/min) of the sample which was taken out was performed under an atmosphere of 23°C. The measured peeling force was defined as the pressure-sensitive adhesive force after being stored at high temperature and high humidity.

The proportion (the pressure-sensitive adhesive force after being stored at high temperature and high humidity/the pressure-sensitive adhesive force at normal temperature and normal humidity) of the pressure-sensitive adhesive force after being stored at high temperature and high humidity to the pressure-sensitive adhesive force at normal temperature and normal humidity was calculated as percentage.

The results are shown in Table 1.

In Comparative Examples 3 and 5, when each of the samples was compressively bonded to the aluminum board, it was not allowed to sufficiently adhere thereto, so that the pressure-sensitive adhesive force after being stored at high temperature and high humidity and the proportion thereof were not capable of being measured.

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

### Industrial Applicability

The oil-resistant pressure-sensitive adhesive sheet including the pressure-sensitive adhesive layer prepared from the aqueous dispersion type oil-resistant pressure-sensitive adhesive composition is used by being allowed to adhere to the adherend disposed under the environment of presence of oil.

## Claims

1. An aqueous dispersion type oil-resistant pressure-sensitive adhesive composition comprising:
an aqueous dispersion polymer and inorganic particles, wherein
the content ratio of the inorganic particles with respect to 100 parts by mass of the aqueous dispersion polymer is 3 to 90 parts by mass.

2. The aqueous dispersion type oil-resistant pressure-sensitive adhesive composition according to claim 1, wherein
an external cross-linking agent is further blended therein.

3. The aqueous dispersion type oil-resistant pressure-sensitive adhesive composition according to claim 1, wherein
the average particle size of each of the inorganic particles is 1 to 1000 nm.

4. The aqueous dispersion type oil-resistant pressure-sensitive adhesive composition according to claim 1, wherein
the inorganic particles are silica particles.

5. The aqueous dispersion type oil-resistant pressure-sensitive adhesive composition according to claim 1, wherein
the aqueous dispersion polymer is an acrylic polymer obtained by polymerizing a monomer component which contains, as the primary component, an alkyl (meth)acrylate.

6. The aqueous dispersion type oil-resistant pressure-sensitive adhesive composition according to claim 1, wherein
the standard deviation of the average particle size of the aqueous dispersion polymer based on volume is 0.001 µm or more and 0.2 µm or less.

7. An oil-resistant pressure-sensitive adhesive sheet comprising:
a pressure-sensitive adhesive layer prepared from an aqueous dispersion type oil-resistant pressure-sensitive adhesive composition, wherein
the aqueous dispersion type oil-resistant pressure-sensitive adhesive composition contains
an aqueous dispersion polymer and inorganic particles, and
the content ratio of the inorganic particles with respect to 100 parts by mass of the aqueous dispersion polymer is 3 to 90 parts by mass.

8. The oil-resistant pressure-sensitive adhesive sheet according to claim 7, wherein
the oil-resistant pressure-sensitive adhesive sheet further includes a substrate and
the pressure-sensitive adhesive layer is laminated on at least one-side surface of the substrate.

9. An adhesion method allowing an oil-resistant pressure-sensitive adhesive sheet to adhere to an adherend disposed under the environment of presence of oil, and
an aqueous dispersion type oil-resistant pressure-sensitive adhesive composition contains
an aqueous dispersion polymer and inorganic particles, and
the content ratio of the inorganic particles with respect to 100 parts by mass of the aqueous dispersion polymer is 3 to 90 parts by mass.

10. An oil-resistant adhesive structure obtained by allowing an oil-resistant pressure-sensitive adhesive sheet to adhere to an adherend disposed under the environment of presence of oil, and
an aqueous dispersion type oil-resistant pressure-sensitive adhesive composition contains
an aqueous dispersion polymer and inorganic particles, and
the content ratio of the inorganic particles with respect to 100 parts by mass of the aqueous dispersion polymer is 3 to 90 parts by mass.
